# EUROPEAN PATENT SPECIFICATION

(11) **EP 2 871 124 B1**
(45) Date of publication and mention of the grant of the patent: **21.12.2016**
(21) Application number: 14182055.5
(22) Date of filing: 25.08.2014
(51) Int. Cl.: B62K 11/10, B62J 17/06, B62H 1/02

(54) **Vehicle body frame structure**
Fahrzeugrahmenstruktur
Structure de châssis de véhicule

(30) Priority: 06.11.2013 JP 2013229980
(43) Date of publication of application: 13.05.2015
(73) Proprietor: Yamaha Hatsudoki Kabushiki Kaisha, Iwata-shi, Shizuoka 438-8501 (JP)
(72) Inventor: Kaneko, Kyohei, Iwata-shi, Shizuoka 438-8501 (JP)
(74) Representative: Grünecker Patent- und Rechtsanwälte PartG mbB

(56) References cited:
- EP-A1- 1 520 775
- EP-A1- 2 255 985

## Description

The present invention relates to a vehicle body frame structure for use in a saddle riding type vehicle, according to the preamble of independent claim 1. Such a vehicle body frame structure can be taken from the prior art document EP 1 520 775 A1.

Prior art document EP 2 255 985 A1 discloses a saddle riding type vehicle having a frame. The frame includes a head pipe, a pair of right and left upper down-frames, a pair of right and left lower down-frames, a pair of right and left upper frames, and a pair of right and left lower frames. The head pipe is disposed in a front portion of the vehicle body and pivotally supports fork-shaped front forks. The upper down-frames are attached to an upper portion of the head pipe and inclined downward and rearward toward a rear portion of the vehicle body. The pair of lower down-frames extends from a lower portion of the head pipe substantially straight downward. Each upper frame is attached to a rear side of a lower end of the related one of the pair of the lower down-frames, pass through the lower ends of the upper down-frames, and extend in the rear direction of the vehicle body in the front half thereof, and is smoothly inclined upward and rearward toward a rear portion of the vehicle body in the rear half thereof, respectively. The lower frames are also attached to the lower ends of the lower down-frames, extend toward a lower portion of the vehicle body, are bent at the lower end of the vehicle body, extend in the rear direction of the vehicle body, are bend at a central portion of the vehicle body, extend toward an upward, rearward portion of the vehicle body, and are connected to the upper frames.

A variety of vehicle body frames for a saddle riding type vehicle have been proposed. For example, JP-A 11-321756 discloses a vehicle body frame for a scooter. The vehicle body frame disclosed by JP-A 11-321756 includes a head pipe, a front frame, a rear frame, and an auxiliary frame. The front frame extends downward from the head pipe. The rear frame is substantially U-shaped in a plan view and has its both ends welded to a lower part of the front frame. The rear frame includes a concave portion in a downward curved shape and an inclined portion that extends backward and obliquely upward from a rear end of the concave part. The auxiliary frame is provided above the rear frame. The auxiliary frame has its front end attached to the front frame and its rear end attached to the rear frame.

In the vehicle body frame disclosed by JP-A 11-321756, the rear frame is welded to the lower part of the front frame. Therefore, the frame structure of the vehicle front part is more compact than the case in which the rear frame is welded to the head pipe.

Furthermore, in a scooter including the vehicle body frame disclosed by JP-A 11-321756, the concave portion of the rear frame is positioned between handles and a seat in a front-back direction. An arm that extends in a vehicle-widthwise direction is welded to the concave portion of the rear frame. The left and right ends of the arm support a foot board on which rider's feet are placed. Therefore, the scooter described above is provided with a sufficient space for placing the rider's feet, and it ensures comfort during riding the vehicle.

The vehicle body frame disclosed by JP-A 11-321756 includes the auxiliary frame in order to improve the rigidity as a whole. The auxiliary frame however supports the front frame and the rear frame only in an auxiliary manner. Therefore, the disclosed vehicle body frame increases rigidity of structures except for the auxiliary frame, which results in increase in the total weight.

It is an object of the present invention to provide a vehicle body frame structure for use in a saddle riding type vehicle, and
a saddle riding type vehicle comprising said vehicle body frame structure, that can be sufficiently rigid and lightweight at the same time.
According to the present invention said object is solved by a vehicle body frame structure having the features of independent claim 1. Preferred embodiments are laid down in the dependent claims 2-12. Moreover, said object is solved by a saddle riding type vehicle according to claim 13.

Accordingly, it is provided a vehicle body frame structure for use in a saddle riding type vehicle, as defined in independent claim 1.

The above-described vehicle body structure includes the upper left and right frames and the lower left and right frames, so that sufficient rigidity against a load in an up-down direction can be secured. In the above-described vehicle body frame structure, the lower left and right frames support the upper left and right frames from below, so that rigidity against a load particularly from above is high. In the above-described vehicle body frame structure, a load in the up-down direction is distributed among the upper left and right frames and the lower left and right frames, so that the vehicle body frame structure as a whole can have a reduced weight. Therefore, the vehicle body frame structure can be sufficiently rigid and lightweight at the same time.

A saddle riding type vehicle includes the vehicle body frame structure described above, a vehicle body cover, and a seat provided above the upper left frame and the upper right frame. The vehicle body cover includes a leg shield portion provided behind the head pipe, an arch portion provided between the leg shield portion and the seat and having a convex front cross section to cover a part of the upper left frame and a part of the upper right frame from above, and a foot board that projects outward in the vehicle-widthwise direction from a lower end of the arch portion.

In the vehicle body frame structure provided in the saddle riding type vehicle, the upper left frame and the upper right frame are connected to the front frame that extends downward from the head pipe. Therefore, the arch portion that covers a part of the upper left frame and a part of the upper right frame can be kept from having an increased height. As a result, a sufficient space for placing rider's feet can be secured, so that comfort during riding the vehicle can be provided.

Other features, elements, steps, characteristics, and advantages of the present invention will become more apparent from the following detailed description of the preferred embodiments of the present teaching with reference to the attached drawings.

### BRIEF DESCRIPTION OF THE DRAWINGS

Fig. 1 is a left side view of a saddle riding type vehicle according to each embodiment.
Fig. is a left side view of a vehicle body frame structure according to an embodiment of the invention.
Fig. 3 is a right side view of the vehicle body frame structure in Fig. 2.
Fig. 4 is a plan view of the vehicle body frame structure in Fig. 2.
Fig. 5 is a rear view of the vehicle body frame structure in Fig. 2.
Fig. 6 is a left side view of the vehicle body frame structure in Fig. 2 having a fuel tank
   assembled therein.
Fig. 7 is a perspective view of a side stand according to each embodiment.
Fig. 8 is a right side view of the side stand in Fig. 7.
Fig. 9 is a front view of the side stand in Fig. 7.
Fig. 10 is a left side view of the vehicle body frame structure according to a further second
   embodiment which does not belong to the invention
Fig. 11 is a right side view of the vehicle body frame structure in Fig. 10.
Fig. 12 is a plan view of the vehicle body frame structure in Fig. 10.

### DESCRIPTION OF THE EMBODIMENTS

A vehicle body frame structure for a saddle riding type vehicle has been proposed and the conventional structure includes a front frame that extends downward from a head pipe, a rear frame that extends backward and upward from a lower part of the front frame, and an auxiliary frame that supports the front and rear frames.

In the vehicle body frame structure described above, the frame structure of the vehicle front part can be compact by attaching the rear frame to the lower part of the front frame. In the vehicle body frame structure, a concave portion in a downward curved shape is formed at the rear frame. In a saddle riding type vehicle including the vehicle body frame structure described above, the concave portion of the rear frame is provided between handles and a seat in the front-back direction, so that a sufficient space for placing rider's feet can be secured.

In the vehicle body frame structure described above, a front end of the auxiliary frame is attached to the front frame and a rear end of the auxiliary frame is attached to the rear frame in order to improve the rigidity. However, in the vehicle body frame structure, the auxiliary frame simply supports the front and rear frames in an auxiliary manner. Therefore the rigidity of the vehicle body frame structure except for the part supported by the auxiliary frame must be improved. This increases the weight of the vehicle body frame structure as a whole.

The inventor then conceived the idea of a vehicle body frame structure that includes upper left and right frames and lower left and right frames aligned with these upper frames. In the vehicle body frame structure, a load in the up-down direction is distributed among the upper left and right frames and the lower left and right frames, so that the total weight can be reduced while the rigidity against the load in the up-down direction can be increased.

Furthermore, in the above-described vehicle body frame structure conceived by the inventor, the lower left and right frames support the upper left and right frames from below. In this way, the rigidity against a load from above can be even more increased.

Therefore, the vehicle body frame structure conceived by the inventor may be sufficiently rigid and lightweight at the same time. In addition, in the vehicle body frame structure conceived by the inventor, the structure of the vehicle front part is compact, and therefore a sufficient space for placing rider's feet can be obtained in a saddle riding type vehicle provided with the vehicle body frame structure, so that comfort during riding the vehicle can be secured.

### Embodiments

Now, saddle riding type vehicles and vehicle body frame structures according to embodiments will be described. In the following description, front-back, left-right, and up-down directions refer to these directions as viewed from a rider on a saddle riding type vehicle. In the drawings, the arrow F indicates a forward direction and the arrow B indicates a backward direction. The arrow R indicates a rightward direction and the arrow L indicates a leftward direction. The arrow U indicates an upward direction and the arrow D indicates a downward direction. In the drawings, the same or corresponding portions are designated by the same reference characters and their description will not be repeated.

### Embodiment of the invention

Now, a saddle riding type vehicle and a vehicle body frame structure according to an embodiment will be described.

### Overall Structure

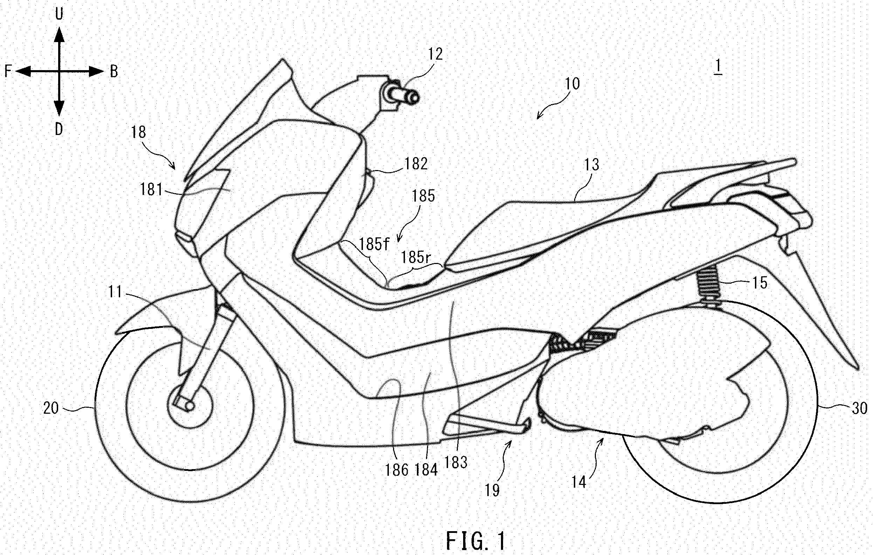

Fig. 1 is a left side view of a saddle riding type vehicle 1 according to the embodiment. The saddle riding type vehicle 1 is a scooter type vehicle and includes a vehicle main body 10, a front wheel 20 provided at a front part of the vehicle main body 10, and a rear wheel 30 provided at a rear part of the vehicle main body 10.

As shown in Fig. 1, the vehicle main body 10 includes a front fork 11, handles 12, a seat 13, a power unit 14, and rear suspensions 15. The vehicle main body 10 further includes a vehicle body frame 16 (that will be described), a fuel tank 17 (that will be described), a vehicle body cover 18 that covers the vehicle body frame 16, and a side stand 19.

The front fork 11 is provided at the front part of the vehicle main body 10. The front fork 11 is inclined so that its upper end is provided behind its lower end. The lower end of the front fork 11 supports the front wheel 20 in a rotatable manner. The upper end of the front fork 11 is connected to the handles 12 through a steering shaft that is not shown. The direction of the front wheel 20 changes as the handles 12 are operated.

The seat 13 is provided behind the handles 12 and above the vehicle body frame 16 that will be described.

The power unit 14 is provided below the seat 13 and swings in the up-down direction. The power unit 14 includes an engine and a transmission case provided behind the engine to store a transmission though not specifically shown. The transmission case is coupled with the rear wheel 30. The engine is supported by the vehicle body frame 16 so that it can swing in the up-down direction.

The rear suspensions 15 are provided to the right and left of the rear wheel 30 at the rear part of the vehicle main body 10. An upper end of each of the rear suspensions 15 is supported by the vehicle body frame 16. A lower end of each of the rear suspensions 15 is coupled with a rear end of the power unit 14.

### Vehicle Body Frame Structure

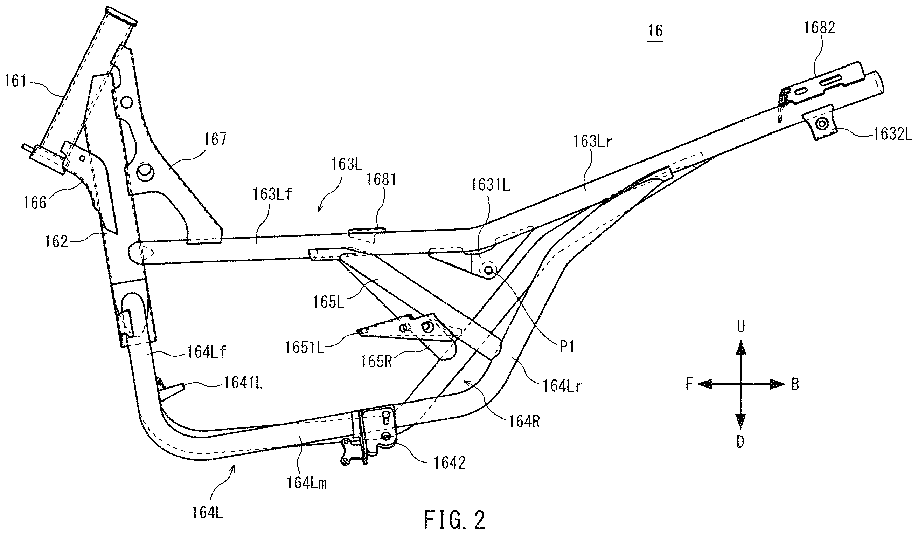

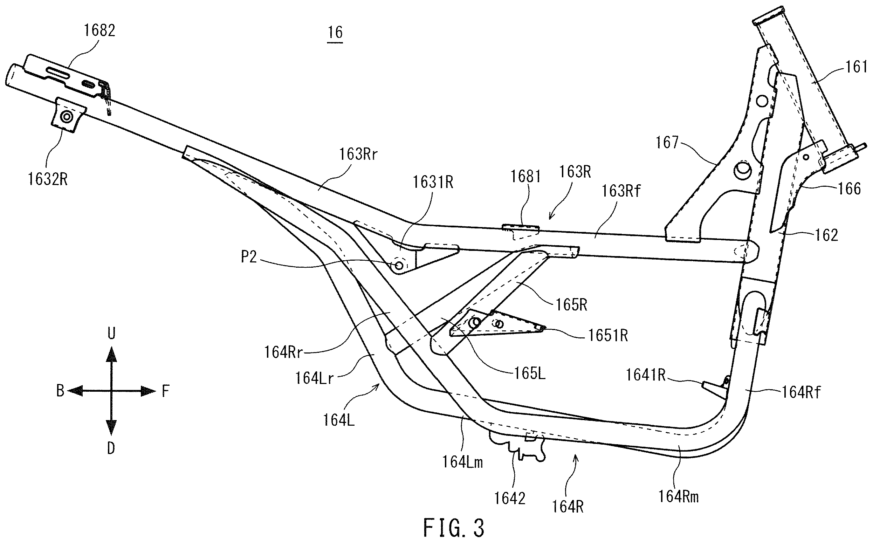

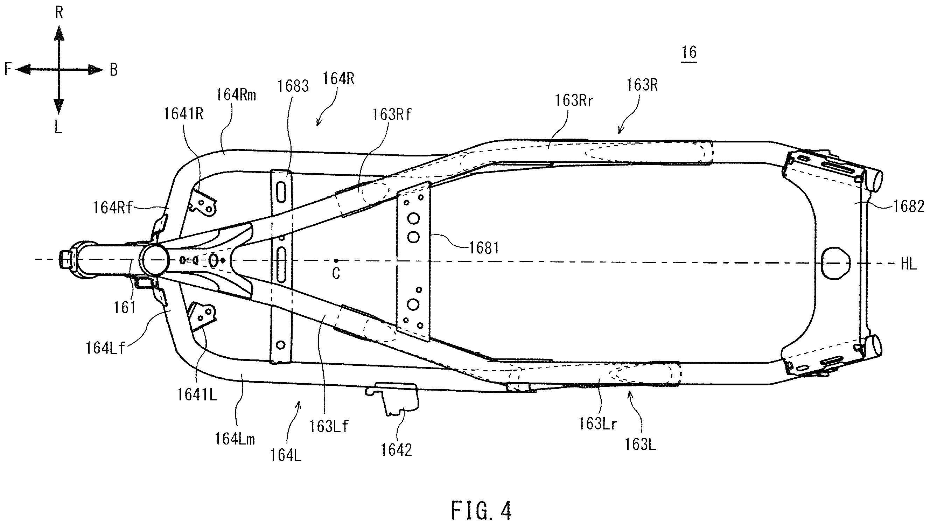

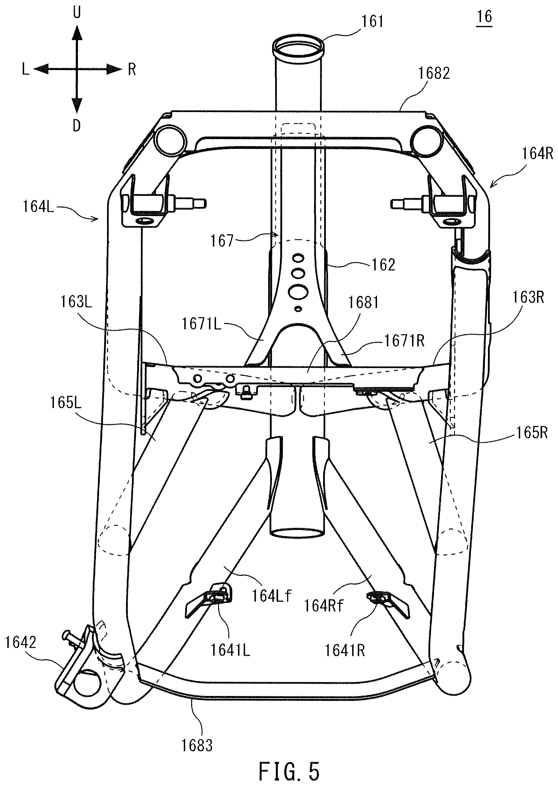

Fig. 2 is a left side view of the vehicle body frame 16. Fig. 3 is a right side view of the vehicle body frame 16. Fig. 4 is a plan view of the vehicle body frame 16. Fig. 5 is a rear view of the vehicle body frame 16.

As shown in Figs. 2 and 3, the vehicle body frame 16 includes a head pipe 161, a front frame 162, an upper left frame 163L, a lower left frame 164L, an upper right frame 163R, and a lower right frame 164R. The vehicle body frame 16 further includes a left reinforcement frame 165L and a right reinforcement frame 165R. The head pipe 161, the front frame 162, the upper left frame 163L, the lower left frame 164L, the left reinforcement frame 165L, the upper right frame 163R, the lower right frame 164R, and the right reinforcement frame 165R each have a circular pipe shape in a vertical cross section.

### Head Pipe

The head pipe 161 is provided at a front part of the vehicle body frame 16. The head pipe 161 is inclined so that its upper end is positioned behind its lower end. The head pipe 161 has a steering shaft (not shown) inserted therein.

### Front Frame

The front frame 162 is attached to the head pipe 161 by welding. Here, the term "attaching" includes directly connecting members with each other but does not include connecting them indirectly with another member interposed therebetween. Note that the term "attaching" represents not only the idea of forming members separately and then directly connecting them but also integrally forming members for example by casting. The front frame 162 extends downward from the head pipe 161. According to the embodiment, the front frame 162 is inclined so that its upper end is positioned slightly ahead of its lower end. However, the front frame 162 may extend straight downward from the head pipe 161 or may be inclined so that its upper end is positioned behind its lower end.

### Left Frame

As shown in Fig. 2, the upper left frame 163L has its front end connected to the front frame 162. Here, the term "connecting" represents both directly connecting members with each other and indirectly connecting members with another member interposed therebetween. The term "connecting" also means forming members discretely and then connecting them but does not mean integrally forming them for example by casting.

According to the embodiment, the front end of the upper left frame 163L is directly attached to a left surface of the front frame 162 by welding. Here, the left surface of the front frame 162 refers to a left half surface of the front frame 162 that would be obtained by equally dividing the front frame 162 into two (left and right halves) along a longitudinal median plane of the front frame 162 and a right surface of the front frame 162 refers to the right half surface thereof.

As shown in Figs. 2 and 4, the upper left frame 163L is provided to the left of a center C of the vehicle in the vehicle-widthwise direction and extends backward from the front frame 162. The upper left frame 163L includes a front part 163Lf that extends backward and obliquely upward from the front frame 162, and a rear part 163Lr that extends backward and obliquely upward from the front part 163Lf in a side view. The inclination of the rear part 163Lr with respect to a horizontal plane is greater than the inclination of the front part 163Lf with respect to the horizontal plane.

In the upper left frame 163L, a power unit support 1631L used to support the power unit 14 is provided to extend across the boundary between the front part 163Lf and the rear part 163Lr. In the upper left frame 163L, a rear suspension support 1632L used to support an upper end of a rear suspension 15 is provided at a rear end of the rear part 163Lr.

The power unit support 1631 L has a shaft hole P1 into which a pivot shaft is inserted. The engine in the power unit 14 is supported rotatably around the pivot shaft inserted to the shaft hole P1 so that the power unit 14 swings up and down. The upper left frame 163L is provided with a load in the up-down direction attributable to the swinging of the power unit 14 through the power unit support 1631L. The power unit support 1631L is surrounded by the upper left frame 163L, the lower left frame 164L, and the left reinforcement frame 165L in a side view. In this way, the vehicle body frame 16 can have improved rigidity against the load in the up-down direction.

As shown in Fig. 4, the front part 163Lf of the upper left frame 163L extends backward and outward (leftward) in the vehicle-widthwise direction from the front frame 162 in a plan view. The rear part 163Lr of the upper left frame 163L extends substantially straight backward from the rear end of the front part 163Lf and has its rear end bent inward (rightward) in the vehicle-widthwise direction in a plan view.

As shown in Fig. 2, the lower left frame 164L is provided below the upper left frame 163L. The lower left frame 164L is provided below the upper left frame 163L in any position in the front-back direction of the vehicle in a side view of the vehicle. Note however that when parts the upper left frame 163L and the lower left frame 164L in the same position in the front-back direction of the vehicle are compared, the lower left frame 164L needs only be below the upper left frame 163L and therefore the lower left frame 164L may partly be positioned above a horizontal line passing through the lowermost point of the upper left frame 163L. As will be described, the lower left frame 164L has its rear end attached to the upper left frame 163L and therefore has a part in contact with the upper left frame 163L.The contacting part does not have to be positioned below the upper left frame 163L.

According to the embodiment, the front end of the lower left frame 164L is attached to the left surface of the front frame 162 in a position below the front end of the upper left frame 163 by welding. Note however that the front end of the lower left frame 164L attached to the front frame 162 may be in the same position in the up-down direction as the front end of the upper left frame 163L that is also attached to the front frame 162. A rear end of the lower left frame 164L is attached to a lower surface of the upper left frame 163L by welding. Here, the lower surface of the upper left frame 163L refers to a lower half surface of the upper left frame 163L that would be obtained by equally dividing the upper left frame 163L into two upper and lower halves along a longitudinal median plane of the upper left frame 163L.

The lower left frame 164L includes a front part 164Lf, an intermediate part 164Lm, and a rear part 164Lr. The lower left frame 164L has outer and inner diameters equal to those of the upper left frame 163L.

As shown in Fig. 2, the front part 164Lf of the lower left frame 164 extends downward and backward from the front frame 162 in a side view. As shown in Fig. 5, the front part 164Lf extends downward and outward (leftward) in the vehicle-widthwise direction in a rear view. More specifically, the front part 164Lf is inclined so that its upper end is positioned forward and inward (rightward) of its lower end. A fuel tank support 1641L is provided to support the fuel tank 17 at the front part 164Lf.

As shown in Fig. 2, the intermediate part 164Lm of the lower left frame 164L extends backward and upward from a lower end of the front part 164Lf. The intermediate part 164Lm is provided with a side stand support 1642 used to support the side stand 19 that will be described.

The rear part 164Lr of the lower left frame 164L extends backward and upward from the rear end of the intermediate part 164Lm. The rear part 164Lr bends at its middle part where its inclination angle with respect to a horizontal plane is reduced.

The left reinforcement frame 165L is provided ahead of the rear end of the lower left frame 164L. The left reinforcement frame 165L has an upper end attached to the upper left frame 163L by welding. A lower end of the left reinforcement frame 165L is attached to the lower left frame 164L by welding. The left reinforcement frame 165L is inclined so that its upper end is positioned ahead of its lower end. The left reinforcement frame 165L is provided with a fuel tank support 1651 L used to support the fuel tank 17.

The left reinforcement frame 165L preferably has a length substantially equal to the distance between an upper end of the left reinforcement frame 165L and the rear end of the lower left frame 164L, and substantially equal to the distance between the lower end of the left reinforcement frame 165L and the rear end of the lower left frame 164L. More specifically, the upper left frame 163L, the lower left frame 164L, and the left reinforcement frame 165L preferably form a substantially triangular shape in a side view. In this way, the resistance against a load input from the power unit support 1631 L can be increased.

### Right Frame

As shown in Figs. 3 and 4, the upper right frame 163R is provided to the right of the vehicle center C in the vehicle-widthwise direction. The upper right frame 163R and the upper left frame 163L are substantially symmetric with respect to a horizontal line HL passing through the vehicle center C in the vehicle-widthwise direction.

As shown in Fig. 3, the upper right frame 163R has a front end connected to the front frame 162. According to the embodiment, the front end of the upper right frame 163R is directly attached to the rightsurface of the front frame 162 by welding.

The upper right frame 163R extends backward from the front frame 162. More specifically, the upper right frame 163R includes a front part 163Rf that extends backward and obliquely upward from the front frame 162, and a rear part 163Rr that extends backward and obliquely upward from the rear end of the front part 163Rf in a side view. The inclination of the rear part 163Rr with respect to a horizontal plane is greater than the inclination of the front surface 163Rf with respect to the horizontal plane.

In the upper right frame 163R, a power unit support 1631R used to support the power unit 14 is provided to extend across the boundary between the front part 163Rf and the rear part 163Rr. In the upper right frame 163R, a rear suspension support 1632R used to support the upper end of other rear suspension 15 is provided at a rear end of the rear part 163Rr.

The power unit support 1631R has a shaft hole P2 into which the pivot shaft is inserted. The engine in the power unit 14 is supported rotatably around the pivot shaft inserted to the shaft hole P2 so that the power unit 14 swings up and down. The upper right frame 163R is provided with a load in the up-down direction attributable to the swinging of the power unit 14 through the power unit support 1631 R. The power unit support 1631 R is surrounded by the upper right frame 163R, the lower right frame 164R, and the right reinforcement frame 165R in a side view. In this way, the rigidity against the load in the up-down direction can be increased in the vehicle body frame 16.

As shown in Fig. 4, in a plan view, the front part 163Rf of the upper right frame 163R extends backward and outward (rightward) in the vehicle widthwise direction from the front frame 162, The front part 163Rf forms an acute angle with the front part 163Lf of the upper left frame 163L in a plan view. The rear part 163Rr of the upper right frame 163R extends substantially straight backward from the rear end of the front part 163Rf and has a rear end bent inward (leftward) in the vehicle widthwise direction in a plan view.

As shown in Fig. 3, the lower right frame 164R is provided under the upper right frame 163R. The lower right frame 164R is provided under the upper right frame 163R in any position in the front-back direction of the vehicle in a side view of the vehicle. Note however that when parts of the upper right frame 163R and the lower right frame 164R in the same position in the front-back direction of the vehicle are compared, the lower right frame 164R needs only be under the upper right frame 163R, and therefore a part of the lower right frame 164R is sometimes positioned above a horizontal line passing through the lowermost point of the upper right frame 163R. As will be described, the lower right frame 164R has its rear end attached to the upper right frame 163R and has a part in contact with the upper right frame 163R.The contacting part does not have to be positioned under the upper right frame 163R.

According to the embodiment, the front end of the lower right frame 164R is attached to the right surface of the front frame 162 by welding under the front end of the upper right frame 163R. Note however that the front end of the lower right frame 164R attached to the front frame 162 may be in the same position as the front end of the upper right frame 163R that is also attached to the front frame 162 in the up-down direction. The rear end of the lower right frame 164R is attached to a lower surface of the upper right frame 163R by welding. Here, the lower surface of the upper right frame 163R refers to a lower half surface of the upper right frame 163R that would be obtained by equally dividing the upper right frame 163R into two (upper and lower halves) along a longitudinal median plane of the upper right frame 163R.

The lower right frame 164R includes a front part 164Rf, an intermediate part 164Rm, and a rear part 164Rr. The lower right frame 164R and the lower left frame 164L are asymmetric with respect to the horizontal line HL (Fig. 4) passing through the vehicle center C in the vehicle-widthwise direction. The outer and inner diameters of the lower right frame 164R are equal to those of the upper right frame 163R.

A shown in Fig. 3, the front part 164Rf of the lower right frame 164R extends downward and backward from the front frame 162 in a side view. As shown in Fig. 5, the front part 164Rf extends downward and outward (rightward) in the vehicle widthwise direction from the front frame 162 in a rear view. More specifically, the front part 164Rf is inclined so that its upper end is positioned forward of its lower end and inward (leftward) of its lower end in the vehicle widthwise direction. The front part 164Rf is provided with a fuel tank support 1641 R used to support the fuel tank 17.

As shown in Fig. 3, the intermediate part 164Rm of the lower right frame 164R extends backward from a lower end of the front part 164Rf. The intermediate part 164Rm has a length shorter than that of the intermediate part 164Lm of the lower left frame 164L. The inclination of the intermediate part 164Rm with respect to a horizontal plane is slightly smaller than the inclination of the intermediate part 164Lm with respect to the horizontal plane.

The rear part 164Rr of the lower right frame 164R extends backward and upward from a rear end of the intermediate part 164Rm. The rear part 164Rr bends at its middle part where its inclination angle with respect to the horizontal plane is reduced.

As described above, since the intermediate part 164Rm of the lower right frame 164R has a length smaller than that of the intermediate part 164Lm of the lower left frame 164L, the front end of the rear part 164Rr of the lower right frame 164R is positioned ahead of a front end of the rear part 164Lr of the lower left frame 164L. The rear part 164Rr of the lower right frame 164R has its rear end attached to the lower surface of the upper right frame 163R in a position slightly behind where a rear end of the rear part 164Lr of the lower left frame 164L is attached to the upper left frame 163L. More specifically, the rear end of the rear part 164Rr of the lower right frame 164R is positioned behind the rear end of the rear part 164Lr of the lower left frame 164L, while the range of the rear part 164Rr of the lower right frame 164R in contact with the upper right frame 163R overlaps the range of the rear part 164Lr of the lower left frame 164L in contact with the upper left frame 163L in a side view. This ensures that the frames provided to the left and right of the vehicle center C in the vehicle-widthwise direction are balanced as for rigidity against a torsional load.

As shown in Fig. 3, the right reinforcement frame 165R is positioned ahead of the rear end of the lower right frame 164R. The right reinforcement frame 165R has an upper end attached to the upper right frame 163R by welding. The right reinforcement frame 165R has a lower end attached to the lower right frame 164R by welding. The right reinforcement frame 165R is inclined so that its upper end is positioned ahead of its lower end. The right reinforcement frame 165R is provided with a fuel tank support 1651R used to support the fuel tank 17.

The right reinforcement frame 165R preferably has a length substantially equal to the distance between the upper end of the right reinforcement frame 165R and the rear end of the lower right frame 164R, and substantially equal to the distance between the lower end of the right reinforcement frame 165R and the rear end of the lower right frame 164R. More specifically, the upper right frame 163R, the lower right frame 164R, and the right reinforcement frame 165R preferably form a substantially regular triangle shape in a side view. In this way, the resistance against a load input from the power unit support 1631 R can be increased.

### Other Arrangements

As shown in Figs. 2 and 3, the front part of the vehicle body frame 16 is provided with gussets 166 and 167 in order to further improve the rigidity against the load in the updon direction.

The gusset 166 is provided behind the head pipe 161. The gusset 166 is attached to the head pipe 161 and the front frame 162 by welding.

The gusset 167 is provided behind the head pipe 161. The gusset 167 is attached to the head pipe 161, the front frame 162, the upper left frame 163L, and the upper right frame 163R by welding. As shown in Fig. 5, branch portions 1671L and 1671R branched to the left and right are formed at a lower part of the gusset 167. The branch portions 1671 L and 1671 R are attached to the front part 163Lf of the upper left frame 163L and the front part 163Rf of the upper right frame 163R, respectively.

As shown in Fig. 4, the vehicle body frame 16 is provided with bridges 1681 and 1682 that couple the upper left frame 163L and the upper right frame 163R. The vehicle body frame 16 is provided with a bridge 1683 that couples the lower left frame 164L and the lower right frame 164R.

### Fuel Tank

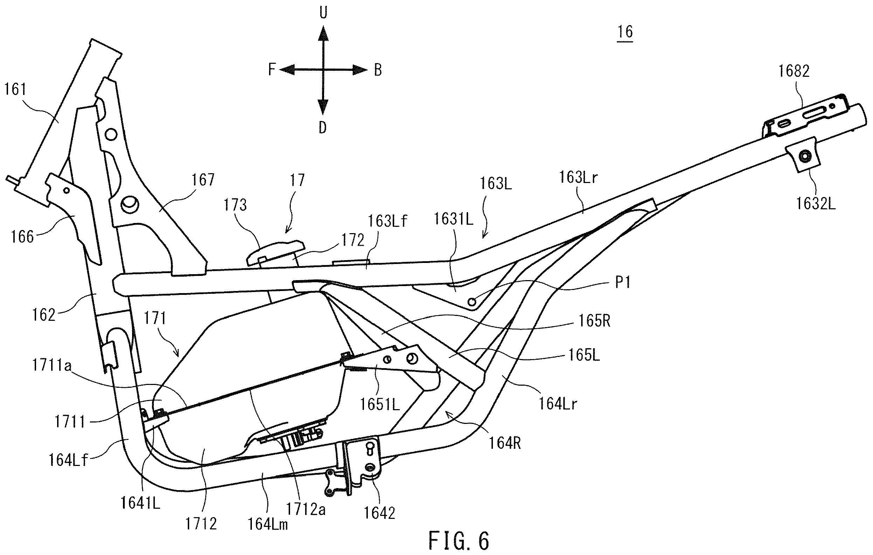

Fig. 6 is a left side view of the vehicle body frame 16 into which the fuel tank 17 is assembled.

The fuel tank 17 includes a tank main body 171, a filler portion 172, and a fuel cap 173.

The tank main body 171 includes an upper half body in a convex shape and a lower half body 1712 in a concave shape. The upper half body 1711 has a flange 1711a at its lower end. The lower half body 1712 has a flange 1712a at its upper end. The flange 1711 a of the upper half body 1711 is joined to the flange 1712a of the lower half body 1712.

The filler portion 172 projects above an upper surface of the upper half body 1711. The filler portion 172 is positioned between the front part 163Lf of the upper left frame 163L and the front part 163Rf of the upper right frame 163R in the left-right direction. More specifically, at least a part of the filler portion 172 overlaps the front part 163Lf of the upper left frame 163L and the front part 163Rf of the upper right frame 163R in a side view.

The filler portion 172 is tubular shaped and has a fuel inlet (not shown) formed at its upper end. The fuel inlet of the filler portion 172 is sealed by the fuel cap 173. Fuel is supplied into the tank main body 171 through the filler portion 172.

The fuel tank 17 is assembled to the vehicle body frame 16. More specifically, the joined flanges 1711 a and 1712a of the fuel tank 17 are supported from below by the fuel tank supports 1641L, 1641R, 1651L, and 1651R of the vehicle body frame 16. The flanges 1711 a and 1712a are fixed to the fuel tank supports 1641L, 1641R, 1651L, and 1651R by fastening members such as screws.

In the vehicle body frame 16, the front part 163Lf of the upper left frame 163L and the front part 163Rf of the upper right frame 163R extend backward from the front frame 162. In the lower left frame 164L and the lower right frame 164R, the front parts 164Lf and 164Rf extend downward from the front frame 162 and then the intermediate parts 164Lm and 164Rm extend backward from the lower ends of the front parts 164Lf and 164Rf. The intermediate part 164Lm of the lower left frame 164L and the intermediate part 164Rm of the lower right frame 164R are positioned substantially in the same positions as those of the front part 163Lf of the upper left frame 163L and the front part 163Rf of the upper right frame 163R in the front-back direction. In this way, a sufficient space is secured to provide the fuel tank 17 between the front parts 163Lf and 163Rf of the upper left and right frames 163L and 163R and the intermediate parts 164Lm and 164Rm of the lower left and right frames 164L and 164R. Therefore, even after the vehicle body frame 16 is assembled, the fuel tank 17 can easily be assembled to the vehicle body frame 16.

### Vehicle Body Cover

Referring back to Fig. 1, the vehicle body cover 18 will be described. As shown in Fig. 1, the vehicle body cover 18 includes a front cover portion 181, a leg shield portion 182, left and right upper side cover portions 183, left and right lower side cover portions 184, an arch portion 185, and left and right foot board portions 186.

The front cover portion 181 covers the head pipe 161 and the front frame 162 from the front, left and right. The leg shield portion 182 is provided behind the head pipe 161. The leg shield portion 182 is connected to the front cover portion 181 to cover the head pipe 161 and the front frame 162 from behind.

The left and right upper side cover portions 183 are positioned below the seat 13. The left and right upper cover portions 183 cover at least a part of the upper left frame 163L and the lower left frame 164L from the left, and cover at least a part of the upper right frame 163R and the lower right frame 164L from the right. The left and right lower side cover portions 184 are provided under the upper cover portions 183 and outward of the upper cover portions 183 in the vehicle-widthwise direction.

The arch portion 185 is provided between the leg shield portion 182 and the seat 13 in the front-back direction. The arch portion 185 has a convex shape in a front section and covers a part of the upper left frame 163L and a part of the upper right frame 163R from above. Parts of the left and right upper side cover portions 183 and the left and right lower side cover portions 184 that are positioned between the leg shield portion 182 and the seat 13 form left and right surfaces of the arch portion 185. The arch portion 185 has a front part 185f having an upper edge formed to have a shape that extends backward and obliquely downward from a lower end of the leg shield portion 182 and a rear part 185r having an upper edge formed to extend backward and obliquely upward from a rear end of the front part 185f in a side view.

The foot board portions 186 are provided to the left and right of the arch portion 185. The foot board portion 186 projects outward in the vehicle-widthwise direction (in the left-right direction) from a lower end of the arch portion 185. A rider gets on the saddle riding type vehicle 1 by inserting the feet in the space above the arch portion 185 and then placing the feet on the foot board portion 186.

### Side Stand

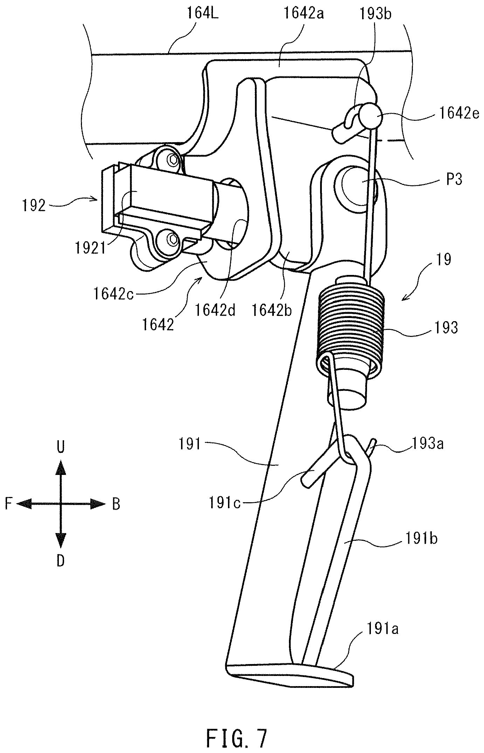

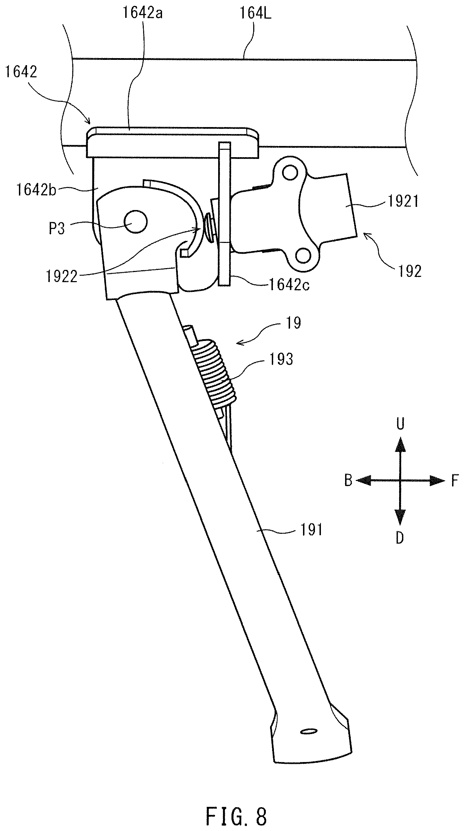

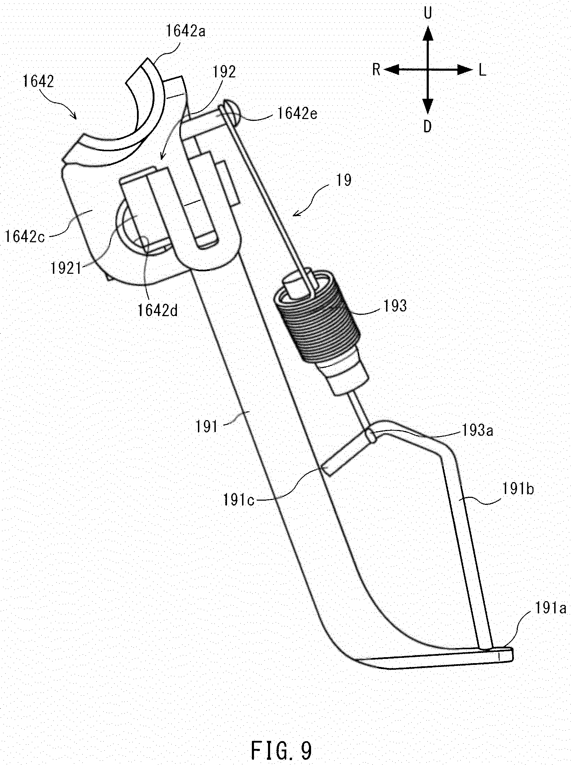

Fig. 7 is a perspective view of a side stand 19 supported by the vehicle body frame 16. Fig. 8 is a right side view of the side stand 19 supported by the vehicle body frame 16. Fig. 9 is a front view of the side stand 19 supported by the vehicle body frame 16. Figs. 7 to 9 show the side stand 19 in an upright state. The side stand 19 in the upright state can keep the saddle riding type vehicle 1 in a stationary state from falling.

As shown in Fig. 7, the side stand 19 is supported by the lower left frame 164L through the side stand support 1642. The side stand support 1642 includes an arc-shaped base member 1642a formed to fit the lower left frame 164L, a plate 1642b that extends downward and outward (leftward) in the vehicle-widthwise direction from the base member 1642a, and a plate 1642c provided in front of the plate 1642b substantially perpendicularly to the plate 1642b. The plate 1642b is provided with a spring support 1642e that supports a coil spring 193 that will be described. The spring support 1642e projects outward (leftward) in the vehicle-widthwise direction from a left surface of the plate 1642b. The plate 1642c has a switch hole 1642d. The switch hole 1642d is provided inward (rightward) of the plate 1642b in the vehicle-widthwise direction.

As shown in Figs. 7 to 9, the side stand 19 includes a side stand main body 191 and a detector 192. The side stand 19 further includes a coil spring 193 having hook portions 193a and 193b at its ends. The side stand main body 191 is supported by the side stand support 1642 so that it rotates around a pivot shaft P3 in the front-back direction. The pivot shaft P3 is provided at the plate 1642b of the side stand support 1642. The side stand main body 191 includes a spring support 191b that extends from a ground-touching portion 191 a to the coil spring 193. The spring support 191b has a hook portion 191c. The hook portions 193a and 193b of the coil spring 193 are hung at the hook portion 191c of the spring support 191 b and the spring support 1642e of the plate 1642b, respectively.

The detector 192 detects whether the side stand 19 is in a stored state when the saddle riding type vehicle 1 starts traveling. In the stored state of the side stand 19, the side stand main body 191 rotates around the pivot shaft P3 until the side stand main body 191 is substantially level, so that the saddle riding type vehicle 1 is no longer supported by the side stand 19.

As shown in Figs. 7 and 8, the detector 192 incudes a detector main body 1921 and a switch 1922. The detector main body 1921 is inserted in the switch hole 1642d of the plate 1642c. The switch 1922 is provided at a rear end of the detector main body 1921. When the side stand 19 is stored, the switch 1922 is pushed by the base (upper end) of the side stand main body 191. In this way, the stored state of the side stand 19 is detected.

The detector main body 1921 is inserted in the switch hole 1642d provided inward of the plate 1642b of the side stand support 1642 in the vehicle-widthwise direction. Therefore, the entire detector 192 does not project outward in the vehicle-widthwise direction beyond the lower left frame 164L. In this way, the detector 192 hardly prevents the foot board portions 186 from being provided, so that the foot board portions 186 can be provided in a lower level, which can secure comfort during riding the vehicle. The entire detector 192 does not project outward in the vehicle-widthwise direction beyond the lower left frame 164, so that the saddle riding type vehicle 1 can have a reduced vehicle width and a sufficient banking angle can be obtained.

Further Embodiment which does not belong to the invention

Now, a vehicle body frame structure according to a further embodiment will be described. The structure other than the vehicle body frame structure is the same as that according to the previous embodiment and therefore will not be described.

### Vehicle Body Frame Structure

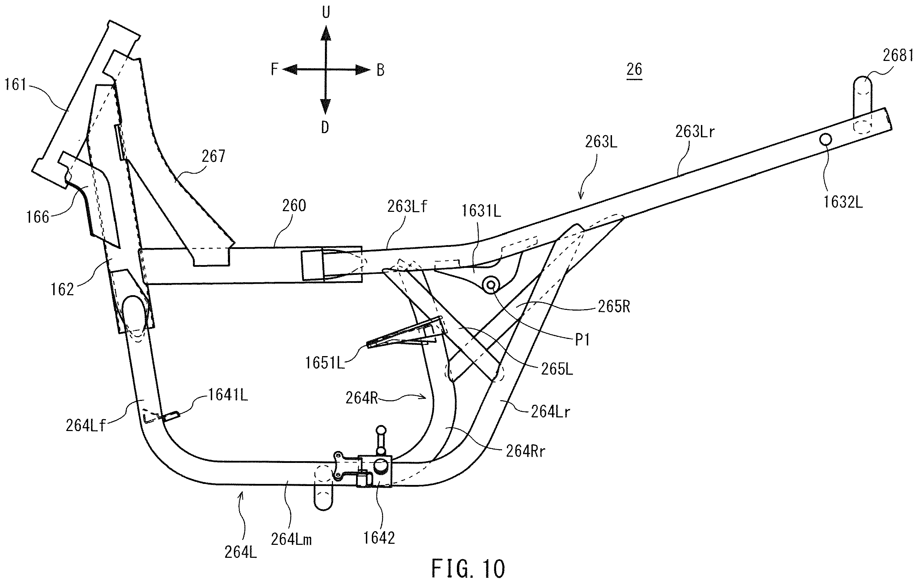

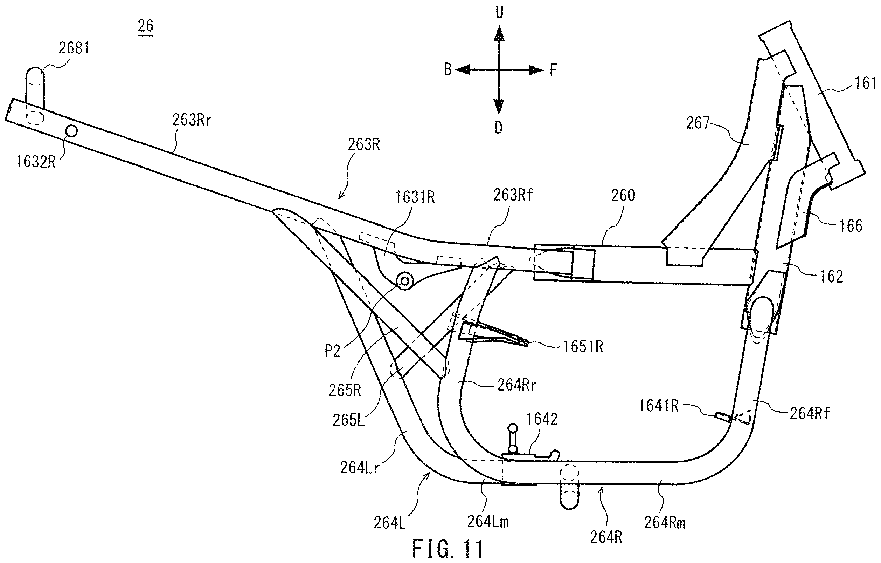

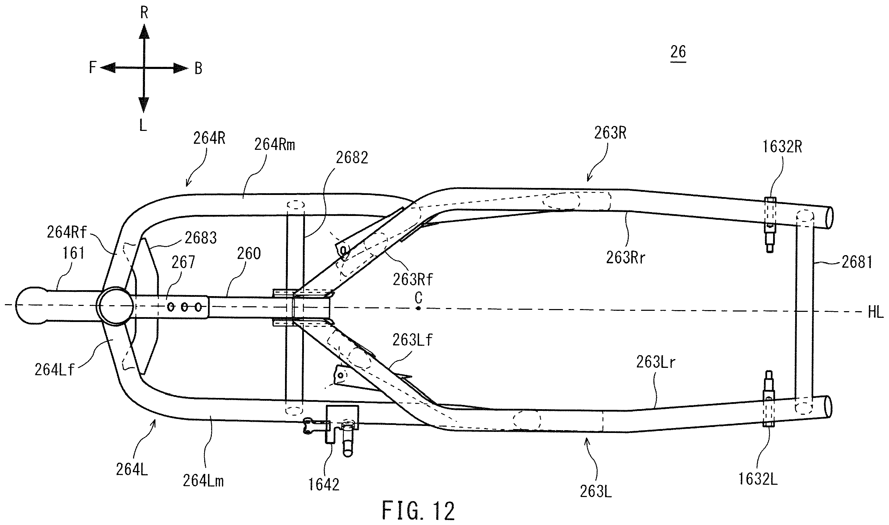

Fig. 10 is a left side view of a vehicle body frame 26 according to the further embodiment. Fig. 11 is a right side view of the vehicle body frame 26. Fig. 12 is a plan view of the vehicle body frame 26.

As shown in Figs. 10 and 11, the vehicle body frame 26 includes a head pipe 161 and a front frame 162 that are the same as those according to the previous embodiment. The vehicle body frame 26 further includes an upper left frame 263L, a lower left frame 264L, a connection frame 260, an upper right frame 263R, and a lower right frame 264R. The vehicle body frame 26 further includes a left reinforcement frame 265L and a right reinforcement frame 265R.

The upper left frame 263L, the lower left frame 264L, the left reinforcement frame 265L, the upper right frame 263R, the lower right frame 264R, and the right reinforcement frame 265R each have a circular pipe shape in a vertical cross section. The connection frame 260 has a square pipe shape in a vertical cross section.

### Connection Frame

As shown in Figs. 10 to 12, the connection frame 260 connects the front frame 162 and the upper left and right frames 263L and 263R. The connection frame 260 has a front end attached to the front frame 162 by welding. As shown in Fig. 12, the connection frame 260 extends substantially straightforward in the front-back direction. The connection frame 260 has higher rigidity than the upper left frame 263L, the lower left frame 264L, the left reinforcement frame 265L, the upper right frame 263R, the lower right frame 264R, and the right reinforcement frame 265R.

### Left Frame

As shown in Figs. 10 and 12, the upper left frame 263L is connected to the front frame 162. According to the further embodiment, the upper left frame 263L is indirectly connected to the front frame 162 through the connection frame 260. More specifically, the front end of the upper left frame 263L is attached to a rear part of the connection frame 260 by welding. The upper left frame 263L is attached to a left surface of the connection frame 260. The left surface of the connection frame 260 refers to a left half surface of the connection frame 260 that would be obtained by equally dividing the connection frame 260 into two (left and right halves) along a longitudinal median plane of the connection frame 260 and a right surface of the connection frame 260 refers to the right half surface thereof.

As shown in Fig. 10, the upper left frame 263L extends backward from the connection frame 260. The upper left frame 263L includes a front part 263Lf that extends backward and obliquely upward from the connection frame 260, and a rear part 263Lr that extends backward and obliquely upward from the front part 263Lf in a side view. The inclination of the rear part 263Lr with respect to a horizontal plane is greater than the inclination of the front part 263Lf with respect to the horizontal plane.

As shown in Fig. 12, the front part 263Lf of the upper left frame 263L extends backward and outward (leftward) in the vehicle-widthwise direction from the connection frame 260 in a plan view. The rear part 263Lr of the upper left frame 263L extends substantially straight backward from the rear end of the front part 263Lf and then bends inward (rightward) in the vehicle-widthwise direction at its middle part in a plan view.

The upper left frame 263L is provided with a power unit support 1631 L and a rear suspension support 1632L similarly to the previous embodiment.

As shown in Fig. 10, the lower left frame 264L is provided under the upper left frame 263L. The lower left frame 264L has a front end attached to the left surface of the front frame 162 below a front end of the connection frame 260 by welding. The lower left frame 264L has a rear end attached to a lower surface of the upper left frame 263L by welding. Here, the lower surface of the upper left frame 263L refers to a lower half surface of the upper left frame 263L that would be obtained by equally dividing the upper left frame 263L into two (upper and lower halves) along a longitudinal median plane of the upper left frame 263L.

The lower left frame 264L includes a front part 264Lf, an intermediate part 264Lm, and a rear part 264Lr. The lower left frame 264L has outer and inner diameters equal to those of the upper left frame 263L.

As shown in Fig. 10, the front part 264Lf of the lower left frame 264L extends downward and backward from the front frame 162 in a side view. As shown in Fig. 12, the front part 264Lf extends outward (leftward) in the vehicle-widthwise direction in a plan view. More specifically, the front part 264Lf is inclined so that its upper end is positioned forward of its lower end and inward (rightward) of its lower end in the vehicle-widthwise direction.

As shown in Fig. 10, the intermediate part 264Lm of the lower left frame 264L extends backward from a lower end of the front part 264Lf. The rear part 264Lr of the lower left frame 264L extends backward and upward from a rear end of the intermediate part 264Lm.

Similarly to the previous embodiment, the lower left frame 264L is provided with a fuel tank support 1641 L and a side stand support 1642.

The left reinforcement frame 265L is provided ahead of the rear end of the lower left frame 264L. The left reinforcement frame 265L is inclined so that its upper end is positioned in front of its lower end. The upper end of the left reinforcement frame 265L is attached to the upper left frame 263L by welding. The lower end of the left reinforcement frame 265L is attached to the lower left frame 264L by welding. The left reinforcement frame 265L is provided with a fuel tank support 1651 L similarly to the previous embodiment. The left reinforcement frame 265L preferably forms a substantially regular triangle shape with the upper left frame 263L and the lower left frame 264L in a side view.

### Right Frame

As shown in Figs. 11 and 12, the upper right frame 263R is connected to the front frame 162. According to the further embodiment, the upper right frame 263R is indirectly connected to the front frame 162 through the connection frame 260. More specifically, the upper right frame 263R has a front end attached to a rear part of the connection frame 260 by welding. The upper right frame 263R is attached to the right surface of the connection frame 260.

As shown in Fig. 11, the upper right frame 263R extends backward from the connection frame 260. The upper right frame 263R includes a front part 263Rf that extends backward and obliquely upward from the connection frame 260, and a rear part 263Rr that extends backward and obliquely upward from a rear end of the front part 263Rf in a side view. The inclination of the rear part 263Rr with respect to a horizontal plane is greater than the inclination of the front part 263Rf with respect to the horizontal plane.

As shown in Fig. 12, in a plan view, the front part 263Rf of the upper right frame 263R extends backward and outward (rightward) in the vehicle widthwise direction from the connection frame 260. The front part 263Rf forms an acute angle with the front part 263Lf of the upper left frame 263L in a plan view. The rear part 263Rr of the upper right frame 263R extends substantially straight backward from the front part 263Rf and then bends inward (leftward) in the vehicle widthwise direction at its middle part in a plan view. The upper right frame 263R and the upper left frame 263L are substantially symmetric with respect to a horizontal line HL passing through the vehicle center C in the vehicle-widthwise direction.

The upper right frame 263R is provided with a power unit support 1631 R and a rear suspension support 1632R similarly to the previous embodiment.

As shown in Fig. 11, the lower right frame 264R is provided below the upper right frame 263R. The lower right frame 264R has a front end attached to a right surface of the front frame 162 by welding in a position below the front end of the connection frame 260. A rear end of the lower right frame 264R is attached to a lower surface of the upper right frame 263R by welding. Here, the lower surface of the upper right frame 263R refers to a lower half surface of the upper right frame 263R that would be obtained by equally dividing the upper right frame 263R into two (upper and lower halves) along a longitudinal median plane of the upper right frame 263R.

The lower right frame 264R and the lower left frame 264L are asymmetric with respect to the horizontal line HL (Fig. 12) passing through the vehicle center C in the vehicle-widthwise direction. The lower right frame 264R includes a front part 264Rf, an intermediate part 264Rm, and a rear part 264Rr. The lower right frame 264R has outer and inner diameters equal to those of the upper right frame 263R.

As shown in Fig. 11, the front part 264Rf of the lower right frame 264R extends downward and backward from the front frame 162 in a side view. As shown in Fig. 12, the front part 264Rf extends outward (rightward) in the vehicle-widthwise direction in a plan view. More specifically, the front part 264Rf is inclined so that its upper end is positioned forward of the its lower end and inward (leftward) of its lower end in the vehicle-widthwise direction.

As shown in Fig. 11, the intermediate part 264Rm of the lower right frame 264R extends backward from a lower end of the front part 264Rf. The rear part 264Rr of the lower right frame 264R extends forward and upward from a rear end of the intermediate part 264Rm. However, the rear part 264Rr may extend backward and upward from the rear end of the intermediate part 264Rm similarly to the previous embodiment. The rear part 264Rr of the lower right frame 264R is provided with a fuel tank support 1651 R.

The lower right frame 264R is provided with a fuel tank support 1641 R similarly to the previous embodiment.

The right reinforcement frame 265R is provided behind a position where the lower right frame 264R is attached to the upper right frame 263R. The right reinforcement frame 265R is inclined so that its upper end is positioned behind its lower end. An upper end of the reinforcement frame 265R is attached to the upper right frame 263R by welding. A lower end of the right reinforcement frame 265R is attached to the lower right frame 264R by welding. The right reinforcement frame 265R preferably forms a substantially regular triangle shape with the upper right frame 263R and the lower right frame 264R in a side view.

According to the further embodiment, the right reinforcement frame 265R is positioned behind the rear end of the lower right frame 264R. However, the right reinforcement frame 265R surrounds the power unit support 1631R with the upper right frame 263R and the lower right frame 264R in a side view similarly to the previous embodiment. Therefore, in the vehicle body frame 26 according to the further embodiment, the rigidity against a load in the up-down direction can be increased.

Note however that the right reinforcement frame 265R may be provided in front of a position where the lower right frame 264R is attached to the upper right frame 263R similarly to the previous embodiment. In this case, the power unit support 1631 R is also preferably surrounded by the upper right frame 263R, the lower right frame 264R, and the right reinforcement frame 265R in a side view.

### Other Arrangements

As shown in Figs. 10 and 11, a gusset 267 is provided behind the head pipe 161 in order to further improve the rigidity of the vehicle body frame 26 in the up-down direction. The gusset 267 is attached to the head pipe 161, the front frame 162, and the connection frame 260 by welding.

As shown in Fig. 12, the vehicle body frame 26 is provided with a bridge 1681 that couples the upper left frame 263L and the upper right frame 263R. The vehicle body frame 26 is provided with bridges 2682 and 2683 that couple the lower left frame 264L and the lower right frame 264R.

### Effects of the Embodiments

As in the foregoing, according to the above-described embodiments, each of the vehicle body frames (16, 26) includes the upper left frame (163L, 263L), the upper right frame (163R, 263R), the lower left frame (164L, 264L), and the lower right frame (164R, 264R). Therefore, the vehicle body frame (16, 26) may have sufficient rigidity against a load in the up-down direction. The load in the up-down direction includes for example an upward load applied by the rear suspensions 15 through the rear suspension supports 1632L and 1632R and a load in the up-down direction applied through the power unit supports 1631L and 1631 R from the swinging power unit 14.

According to each of the above-described embodiments, the lower left frame (164L, 264L) and the lower right frame (164R, 264R) support the upper left frame (163L, 263L) and the upper right frame (163R, 263R) from below, respectively. Therefore, the vehicle body frame (16, 26) may have improved rigidity against a load particularly from above.

According to each of the above-described embodiments, the left reinforcement frame (165L, 265R) is provided between the upper left frame (163L, 164L) and the lower left frame (264L, 265L). The right reinforcement frame (165R, 265R) is provided between the upper right frame (163R, 263R) and the lower right frame (164R, 264R). In this way, the rigidity against a load in the up-down direction can be more improved.

According to each of the above-described embodiments, the fuel tank 17 is provided between the upper left and right frames 163L and 163R and the lower left and right frames 164L and 164R. The fuel tank 17 is supported at the vehicle body frame (16, 26) by the four fuel tank supports 1641 L, 1641 R, 1651 L, and 1651 R. In this arrangement, the rigidity against a load in the up-down direction can be even more improved.

According to each of the above-described embodiments, a load in the up-down direction is distributed among the upper left frame (163L, 263L), the upper right frame (163R, 263R), the lower left frame (164L, 264L), and the lower right frame (164R, 264R). Therefore, the upper left frame (163L, 263L), the upper right frame (163R, 263R), the lower left frame (164L, 264L), and the lower right frame (164R, 264R) can each have a reduced diameter. Therefore, the vehicle body frame (16, 26) as a whole may be reduced in weight.

According to each of the above-described embodiments, the lower left frame (163L, 263L) and the upper right frame (163R, 263R) are connected to the front frame 162 that extends downward from the head pipe 161 instead of the head pipe 161. In this way, the positions of the upper left frame (163L, 263L) and the upper right frame (163R, 263R) can be lowered. Therefore, in the saddle riding type vehicle 1 including the vehicle body frame (16, 26), the arch portion 185 that covers the upper left frame (163L,263L) and the upper right frame (163R, 263) from above can have a reduced height. As a result, a sufficient space for placing rider's feet can be secured, so that comfort during riding the vehicle can be provided.

According to each of the above-described embodiments, the upper left frame (163L, 263L) has outer and inner diameters equal to those of the lower left frame (164L, 264L). The outer and inner diameters of the upper right frame (163R, 263R) are equal to those of the lower right frame (164R, 264R). In this arrangement, the difference among loads received by the upper left frame (163L, 263L), the upper right frame (163R, 263R), the lower left frame (164L, 264L), and the lower right frame (164R, 264R) is reduced, so that the vehicle body frame (16, 26) can be made more compact. As a result, the vehicle body frame (16, 26) can be reduced in weight and a sufficient space for placing rider's feet can be secured, so that comfort during riding the vehicle can be provided.

According to each of the above-described embodiments, in the vehicle body frame (16, 26), the front part (163Lf, 263Lf) of the upper left frame (163L, 263L) and the front part (163Rf, 263Rf) of the upper right frame (163R, 263R) form an acute angle in a plan view. In this arrangement, the upper left frame (163L, 263L) and the upper right frame (163R, 263R) do not greatly expand to the left and right near the front frame 162, so that a sufficient space for placing rider's feet can be provided behind the front frame 162.

As in the foregoing, the saddle riding type vehicles 1 and the vehicle body frames 16 and 26 according to the embodiments described above can be sufficiently rigid and lightweight at the same time, and comfort during riding the vehicle can be improved.

The embodiments have been described but the present teaching is not limited to the described embodiments, and various modifications can be made.

For example, according to the above-described embodiments, welding is employed as means for attaching a frame to another frame. However, the means for attaching frames is not limited to welding according to the present teaching. For example, frames may be fixed to each other using a fastening member such as a screw.

According to the above-described embodiments, the upper left frame has outer and inner diameters equal to those of the lower left frame. However, the teaching is not limited to the above-described embodiments. According to the present teaching, the outer diameter of the upper left frame may be different from that of the lower left frame and/or the inner diameter of the upper left frame may be different from that of the lower left frame. Similarly, the outer diameter of the upper right frame may be different from that of the lower right frame and/or the inner diameter of the upper right frame may be different from that of the lower right frame.

According to the above-described embodiments, the front frame, the upper left frame, the lower left frame, the left reinforcement frame, the upper right frame, the lower right frame, the right reinforcement frame, and the connection frame each have a pipe shape. However, these frames according to the present teaching are not limited to those of the embodiments. For example, these frames according to the present teaching may be partly or entirely solid. In this case, the outer diameters of the frames may be the same or different. The cross sectional shapes of these frames are not particularly limited and the shapes may be any of a circular shape, a square shape, an elliptical shape, a polygonal shape other than the square shape, and other kinds of shapes.

According to the above-described embodiments, the upper left frame and the upper right frame are substantially symmetric with respect to a horizontal line passing through a vehicle center in the vehicle-widthwise direction. However, the upper left frame and the upper right frame according to the present teaching are not limited to those of the embodiments. For example, the upper left frame and the upper right frame according to the present teaching may be asymmetric with respect to the horizontal line.

According to the above-described embodiments, the lower left frame and the lower right frame are asymmetric with respect to the horizontal line passing through the vehicle center in the vehicle-widthwise direction. However, the lower left frame and the lower right frame according to the present teaching are not limited to those of the embodiments. For example, the lower left frame and the lower right frame according to the present teaching may be substantially symmetric with respect to the horizontal line.

According to the embodiments, the vehicle body frame structure includes the left reinforcement frame and the right reinforcement frame. However, the vehicle body frame structure according to the present teaching is not limited to those of the embodiments. For example, the frame structure according to the present teaching may include only one of the left and right reinforcement frames or neither of them.

The scooter type vehicles according to the embodiments have been described but the present teaching is also applicable to a saddle riding type vehicle other than the scooter type vehicle.

Note that according to the present teaching and the embodiments, the state of "extending upward" or "extending downward" needs only include a component in an up-down direction. This includes not only a configuration extending exactly in the up-down direction but also a configuration extending obliquely with respect to the exact up-down direction. Similarly, according to the present teaching and the embodiments, the state of "extending backward" needs only include a component in a front-back direction. This includes not only a configuration extending in the exact front-back direction but also a configuration extending in a direction inclined with respect to the exact front-back direction.

According to the present teaching and the embodiments, the state of "extending outward in the vehicle-widthwise direction" needs only include a component in the vehicle-widthwise direction. This includes not only a configuration extending in the exact vehicle-widthwise direction but also a configuration extending in a direction inclined with respect to the exact vehicle-widthwise direction. Similarly, the state of "projecting outward in the vehicle-widthwise direction" needs only include a component in the vehicle-widthwise direction. This refers not only to projecting in the exact vehicle-widthwise direction but also projecting in a direction inclined with respect to the exact vehicle-widthwise direction.

In the description of the present teaching and the embodiments, the "connecting" means both directly connecting members and indirectly connecting members with another member interposed therebetween. More specifically, in the description of the present teaching and the embodiments, the "connecting" means forming members discretely and then connecting them and not integrally forming them for example by casting.

Furthermore, in the description of the present teaching and the embodiments, the "attaching" is an idea narrower than the "connecting" and includes directly connecting members but not indirectly connecting them with another member interposed therebetween. Note that in the description of the present teaching and the embodiments, the "attaching" refers not only to forming members discretely and then directly connecting them but also integrally forming them for example by casting.

The embodiments are described with regard to "portions" of means. According to the present teaching said term refers to a section of an element or member and, alternatively, to an individual member.

## Claims

1. A vehicle body frame structure for use in a saddle riding type vehicle, comprising:
a head pipe (161);
a single front frame (162) attached to the head pipe (161) to extend downward from the head pipe (161) and positioned at a vertical plane passing through a center (C) of the vehicle in the vehicle-widthwise direction;
an upper left frame (163L) provided to the left of the center (C) of the vehicle in the vehicle-widthwise direction and connected to the front frame (162) to extend backward;
an upper right frame (163R) provided to the right of the center (C) of the vehicle in the vehicle-widthwise direction and connected to the front frame (162) to extend backward; a lower left frame (164L) provided below the upper left frame (163L) and having a front end attached to the front frame (162) and a rear end attached to a lower surface of the upper left frame (163L); and
a lower right frame (164R) provided below the upper right frame (163R) and having a front end attached to the front frame (162) and a rear end attached to a lower surface of the upper right frame (163R), **characterized in that**
the front end of the upper left frame (163L) is directly attached to a left surface of the front frame (162) and the front end of the upper right frame (163R) is directly attached to a right surface of the front frame (162).

2. A vehicle body frame structure according to claim 1, **characterized in that** the upper left frame (163L) and the upper right frame (163R) each include a rear suspension support (1632L,1632R) used to support an upper end of a rear suspension (15), and the rear suspension supports (1632L,1632R) are provided behind the rear end of the lower right frame (164R) and the rear end of the lower left frame (164L).

3. A vehicle body frame structure according to claim 1 or 2, **characterized in that** the upper left frame (163L) and the upper right frame (163R) are welded to the front frame (162).

4. A vehicle body frame structure according to any one of claims 1 to 3, **characterized in that** at least one of the upper left frame (163L), the upper right frame (163R), the lower left frame (164L), and the lower right frame (164R) has a pipe shape.

5. A vehicle body frame structure according to any one of claims 1 to 4, **characterized in that** the upper left frame (163L) has a diameter equal to that of the lower left frame (164L).

6. A vehicle body frame structure according to any one of claims 1 to 5, **characterized in that** the upper right frame (163R) has a diameter equal to that of the lower right frame (164R).

7. A vehicle body frame structure according to any one of claims 1 to 6, **characterized in that** the upper left frame (163L) and the upper right frame (163R) each include a front part (163Lf,163Rf) that extends backward and outward in the vehicle-widthwise direction from a front end thereof, and the front part (163Lf) of the upper left frame (163L) forms an acute angle with the front part (163Rf) of the upper right frame (163R) in a plan view.

8. A vehicle body frame structure according to any one of claims 1 to 7, **characterized by** a left reinforcement frame (165L) provided ahead of the rear end of the lower left frame (164L) and having an upper end attached to the upper left frame (163L) and a lower end attached to the lower left frame (164L).

9. A vehicle body frame structure according to claim 8, **characterized in that** the left reinforcement frame (165L) has a length substantially equal to a distance between the upper end of the left reinforcement frame (165L) and the rear end of the lower left frame (164L) and substantially equal to a distance between the lower end of the left reinforcement frame (165L) and the rear end of the lower left frame (164L).

10. A vehicle body frame structure according to any one of claims 1 to 9, **characterized by** a right reinforcement frame (165R) provided ahead of the rear end of the lower right frame (164R) and having an upper end attached to the upper right frame (163R) and a lower end attached to the lower right frame (164R).

11. A vehicle body frame structure according to claim 10, **characterized in that** the right reinforcement frame (165R) has a length substantially equal to a distance between the upper end of the right reinforcement frame (165R) and the rear end of the lower right frame (164R) and substantially equal to a distance between the lower end of the right reinforcement frame (165R) and the rear end of the lower right frame (164R).

12. A vehicle body frame structure according to any one of claims 1 to 11, **characterized in that** the lower left frame (164L) and lower right frame (164R) each include a front part (164Lf,164Rf) that extends downward from the front frame (162), an intermediate part (164Lm,164Rm) that extends backward from a lower end of the front part (164Lf,164Rf), and a rear part (164Lr,164Rr) that extends backward and upward from a rear end of the intermediate part (164Lm,164Rm).

13. A saddle riding type vehicle comprising the vehicle body frame structure according to any one of claims 1 to 12, comprising:
a vehicle body cover (18); and
a seat (13) provided above the upper left frame (163L) and the upper right frame (163R), the vehicle body cover (18) comprising:
a leg shield portion (182) provided behind the head pipe (161);
an arch portion (185) provided between the leg shield portion (182) and the seat (13) and having a convex shape in a front cross section to cover a part of the upper left frame (163L) and a part of the upper right frame (163R) from above; and
a foot board portion (186) that projects outward in the vehicle-widthwise direction from a lower end of the arch portion (185).

## Patentansprüche

1. Eine Fahrzeug-Körper-Rahmen-Struktur zur Verwendung in einem Sattel-Reit-Typ-Fahrzeug, die umfasst:
ein Kopfrohr (161);
einen einzelnen vorderen Rahmen (162), angebracht an dem Kopfrohr (161), um sich nach unten von dem Kopfrohr (161) zu erstrecken und positioniert in einer vertikalen Ebene, welche durch eine Mitte (C) des Fahrzeugs in der Fahrzeug-Breiten-Richtung hindurchtritt;
einen oberen linken Rahmen (163L), vorgesehen links von der Mitte (C) des Fahrzeugs in der Fahrzeug-Breiten-Richtung und verbunden mit dem vorderen Rahmen (162), um sich nach hinten zu erstrecken;
einen oberen rechten Rahmen (163R), vorgesehen rechts von der Mitte (C) des Fahrzeugs in der Fahrzeug-Breiten-Richtung und verbunden mit dem vorderen Rahmen (162), um sich nach hinten zu erstrecken;
einen unteren linken Rahmen (164L), vorgesehen unterhalb des oberen linken Rahmens (163L) und mit einem vorderen Ende, angebracht an dem vorderen Rahmen (162), und einem hinteren Ende, angebracht an einer unteren Fläche des oberen linken Rahmens (163L); und
einen unteren rechten Rahmen (164R), vorgesehen unterhalb des oberen rechten Rahmens (163R) und mit einem vorderen Ende, angebracht an dem vorderen Rahmen (162), und einem hinteren Ende, angebracht an einer unteren Fläche des oberen rechten Rahmens (163R),
**dadurch gekennzeichnet, dass** das vordere Ende des oberen linken Rahmens (163L) direkt an einer linken Fläche des vorderen Rahmens (162) angebracht ist und das vordere Ende des oberen rechten Rahmens (163R) direkt an einer rechten Fläche des vorderen Rahmens (162) angebracht ist.

2. Eine Fahrzeug-Körper-Rahmen-Struktur gemäß Anspruch 1, **dadurch gekennzeichnet, dass** der obere linke Rahmen (163L) und der obere rechte Rahmen (161 R) jeder ein hinteres Feder-Lagerung (1632L, 1632R) beinhaltet, das verwendet ist, um ein oberes Ende einer hinteren Federung (15) zu lagern, und die hinteren Feder-Lagerungen (1632L, 1632R) sind hinter dem hinteren Ende des unteren rechten Rahmens (164R) und dem hinteren Ende des oberen linken Rahmens (164L) vorgesehen.

3. Eine Fahrzeug-Körper-Rahmen-Struktur gemäß Anspruch 1 oder 2, **dadurch gekennzeichnet, dass** der obere linke Rahmen (163L) und der obere rechte Rahmen (163R) an dem vorderen Rahmen (162) verschweißt sind.

4. Eine Fahrzeug-Körper-Rahmen-Struktur gemäß irgendeinem der Ansprüche 1 bis 3, **dadurch gekennzeichnet, dass** zumindest einer von dem oberen linken Rahmen (163L), dem oberen rechten Rahmen (163R), dem unteren linken Rahmen (164L) und dem unteren rechten Rahmen (164R) eine Rohrform hat.

5. Eine Fahrzeug-Körper-Rahmen-Struktur gemäß irgendeinem der Ansprüche 1 bis 4, **dadurch gekennzeichnet, dass** der obere linke Rahmen (163L) einen Durchmesser hat, gleicht mit dem des unteren linken Rahmens (164L).

6. Eine Fahrzeug-Körper-Rahmen-Struktur gemäß irgendeinem der Ansprüche 1 bis 5, **dadurch gekennzeichnet, dass** der obere rechte Rahmen (163R) einen Durchmesser hat, gleicht mit dem des unteren rechten Rahmens (164R).

7. Eine Fahrzeug-Körper-Rahmen-Struktur gemäß irgendeinem der Ansprüche 1 bis 6, **dadurch gekennzeichnet, dass** der obere linke Rahmen (163L) und der obere rechte Rahmen (163R) jeder ein vorderes Teil (163Lf, 163Rf) beinhaltet, das sich nach hinten und außen in der Fahrzeug-Breiten-Richtung von einem vorderen Ende desselben erstreckt, und
das vordere Teil (163Lf) des oberen linken Rahmens (163L) einen spitzen Winkel mit dem vorderen Teil (163Rf) des oberen rechten Rahmens (163R) in einer Draufsicht ausbildet.

8. Eine Fahrzeug-Körper-Rahmen-Struktur gemäß irgendeinem der Ansprüche 1 bis 7 **gekennzeichnet durch** einen linken Verstärkungs-Rahmen (165L), der vor dem hinteren Ende des unteren linken Rahmens (164L) vorgesehen ist und ein oberes Ende, angebracht an dem oberen linken Rahmen (163L), und ein unteres Ende, angebracht an dem unteren linken Rahmen (164L), hat.

9. Eine Fahrzeug-Körper-Rahmen-Struktur gemäß Anspruch 8, **dadurch gekennzeichnet, dass** der linke Verstärkungs-Rahmen (165L) eine Länge hat, im Wesentlichen gleich zu einem Abstand zwischen dem oberen Ende des linken Verstärkungs-Rahmens (165L) und dem hinteren Ende des unteren linken Rahmens (164L), und im Wesentlichen gleich zu einem Abstand zwischen dem unteren Ende des linken Verstärkungs-Rahmens (165L) und dem hinteren Ende des unteren linken Rahmens (164L).

10. Eine Fahrzeug-Körper-Rahmen-Struktur gemäß irgendeinem der Ansprüche 1 bis 9 **gekennzeichnet durch** einen rechten Verstärkungs-Rahmen (165R), der vor dem hinteren Ende des unteren rechten Rahmens (164R) vorgesehen ist und ein oberes Ende, angebracht an dem oberen rechten Rahmen (163R), und ein unteres Ende, angebracht an dem unteren rechten Rahmen (164R), hat.

11. Eine Fahrzeug-Körper-Rahmen-Struktur gemäß Anspruch 10, **dadurch gekennzeichnet, dass** der rechte Verstärkungs-Rahmen (165R) eine Länge hat, im Wesentlichen gleich zu einem Abstand zwischen dem oberen Ende des rechten Verstärkungs-Rahmens (165R) und dem hinteren Ende des unteren rechten Rahmens (164R), und im Wesentlichen gleich mit einem Abstand zwischen dem unteren Ende des rechten Verstärkungs-Rahmens (165R) und dem hinteren Ende des unteren rechten Rahmens (164R).

12. Eine Fahrzeug-Körper-Rahmen-Struktur gemäß irgendeinem der Ansprüche 1 bis 11, **dadurch gekennzeichnet, dass** der untere linke Rahmen (164L) und der untere rechte Rahmen (164R) jeder ein vorderes Teil (164Lf, 164Rf), das sich nach unten von dem vorderen Rahmen (162) erstreckt, ein Zwischen-Teil (164Lm, 164Rm), das sich nach hinten von einem unteren Ende des vorderes Teils (164Lf, 164Rf) erstreckt, und ein hinteres Teil (164Lr, 164Rr), das sich nach hinten und oben von einem hinteren Ende des Zwischen-Teils (164Lm, 164Rm) erstreckt, beinhaltet.

13. Ein Sattel-Reit-Typ-Fahrzeug, das die Fahrzeug-Körper-Rahmen-Struktur gemäß irgendeinem der Ansprüche 1 bis 12 umfasst, umfasst:
eine Fahrzeug-Körper-Abdeckung (18); und
einen Sitz (13), vorgesehen oberhalb des oberen linken Rahmens (163L) und des oberen rechten Rahmens (163R), die Fahrzeug-Körper-Abdeckung (18) umfasst:
einen Bein-Schild-Abschnitt (182), der hinter dem Kopfrohr (161) vorgesehen ist;
einen Bogen-Abschnitt (185), der zwischen dem Bein-Schild-Abschnitt (182) und dem Sitz vorgesehen ist und eine konvexe Form in einem vorderen Querschnitt hat, um einen Teil des oberen linken Rahmens (163L) und einen Teil des oberen rechten Rahmens (163R) von oben abzudecken;
einen Fuß-Brett-Abschnitt (186), der nach außen in der Fahrzeug-Breiten-Richtung von einem unteren Ende des Bogen-Abschnitts (185) vorsteht.

## Revendications

1. Structure de châssis de véhicule, destinée à être utilisée dans un véhicule du type à selle, comprenant :
un tube frontal (161) ;
un châssis avant unique (162) attaché au tube frontal (161) de manière à s'étendre vers le bas à partir du tube frontal (161) et positionné dans un plan vertical passant par un centre (C) du véhicule dans la direction de la largeur du véhicule ;
un châssis supérieur gauche (163L) disposé à gauche du centre (C) du véhicule dans la direction de la largeur du véhicule et connecté au châssis avant (162) de manière à s'étendre vers l'arrière ;
un châssis supérieur droit (163R) disposé à droite du centre (C) du véhicule dans la direction de la largeur du véhicule et connecté au châssis avant (162) de manière à s'étendre vers l'arrière ;
un châssis inférieur gauche (164L) disposé sous le châssis supérieur gauche (163L) et comprenant une extrémité avant attachée au châssis avant (162) et une extrémité arrière attachée à une surface inférieure du châssis supérieur gauche (163L) ; et
un châssis inférieur droit (164R) disposé sous le châssis supérieur droit (163R) et comprenant une extrémité avant attachée au châssis avant (162) et une extrémité arrière attachée à une surface inférieure du châssis supérieur droit (163R),
**caractérisé en ce que**
l'extrémité avant du châssis supérieur gauche (163L) est directement attachée à une surface gauche du châssis avant (162) et l'extrémité avant du châssis supérieur droit (163R) est directement attachée à une surface droite du châssis avant (162).

2. Structure de châssis de véhicule selon la revendication 1, **caractérisée en ce que** le châssis supérieur gauche (163L) et le châssis supérieur droit (163R) incluent chacun un support de suspension arrière (1632L, 1632R) utilisé pour supporter une extrémité supérieure d'une suspension arrière (15), et les supports de suspension arrière (1632L, 1632R) sont disposés derrière l'extrémité arrière du châssis inférieur droit (164R) et l'extrémité arrière du châssis inférieur gauche (164L).

3. Structure de châssis de véhicule selon la revendication 1 ou 2, **caractérisée en ce que** le châssis supérieur gauche (163L) et le châssis supérieur droit (163R) sont soudés au châssis avant (162).

4. Structure de châssis de véhicule selon l'une quelconque des revendications 1 à 3, **caractérisée en ce que** au moins un châssis parmi le châssis supérieur gauche (163L), le châssis supérieur droit (163R), le châssis inférieur gauche (164L) et le châssis inférieur droit (164R) a une forme de tuyau.

5. Structure de châssis de véhicule selon l'une quelconque des revendications 1 à 4, **caractérisée en ce que** le châssis supérieur gauche (163L) comporte un diamètre égal à celui du châssis inférieur gauche (164L).

6. Structure de châssis de véhicule selon l'une quelconque des revendications 1 à 5, **caractérisée en ce que** le châssis supérieur droit (163R) comporte un diamètre égal à celui du châssis inférieur droit (164R).

7. Structure de châssis de véhicule selon l'une quelconque des revendications 1 à 6, **caractérisée en ce que** le châssis supérieur gauche (163L) et le châssis supérieur droit (163R) incluent chacun une partie avant (163Lf, 163Rf) qui s'étend vers l'arrière et vers l'extérieur dans la direction de la largeur du véhicule à partir de l'extrémité avant de cette dernière, et la partie avant (163Lf) du châssis supérieur gauche (163L) forme un angle aigu avec la partie avant (163Rf) du châssis supérieur droit (163R) dans une vue en plan.

8. Structure de châssis de véhicule selon l'une quelconque des revendications 1 à 7, **caractérisée par** un châssis de renfort gauche (165L) disposé en avant de l'extrémité arrière du châssis inférieur gauche (164L) et comportant une extrémité supérieure attachée au châssis supérieur gauche (163L) et une extrémité inférieure attachée au châssis inférieur gauche (164L).

9. Structure de châssis de véhicule selon la revendication 8, **caractérisée en ce que** le châssis de renfort gauche (165L) comporte une longueur substantiellement égale à une distance entre l'extrémité supérieure du châssis de renfort gauche (165L) et l'extrémité arrière du châssis inférieur gauche (164L) et substantiellement égale à une distance entre l'extrémité inférieure du châssis de renfort gauche (165L) et l'extrémité arrière du châssis inférieur gauche (164L).

10. Structure de châssis de véhicule selon l'une quelconque des revendications 1 à 9, **caractérisée par** un châssis de renfort droit (165R) disposé en avant de l'extrémité arrière du châssis inférieur droit (164R) et comportant une extrémité supérieure attachée au châssis supérieur droit (163R) et une extrémité inférieure attachée au châssis inférieur droit (164R).

11. Structure de châssis de véhicule selon la revendication 10, **caractérisée en ce que** le châssis de renfort droit (165R) comporte une longueur substantiellement égale à une distance entre l'extrémité supérieure du châssis de renfort droit (165R) et l'extrémité arrière du châssis inférieur droit (164R) et substantiellement égale à une distance entre l'extrémité inférieure du châssis de renfort droit (165R) et l'extrémité arrière du châssis inférieur droit (164R).

12. Structure de châssis de véhicule selon l'une quelconque des revendications 1 à 11, **caractérisée en ce que** le châssis inférieur gauche (164L) et le châssis inférieur droit (164R) incluent chacun une partie avant (164Lf, 164Rf) qui s'étend vers le bas à partir du châssis avant (162), une partie intermédiaire (164Lm, 164Rm) qui s'étend vers l'arrière à partir d'une extrémité inférieure de la partie avant (164Lf, 164Rf), et une partie arrière (164Lr, 164Rr) qui s'étend vers l'arrière et vers le haut à partir d'une extrémité arrière de la partie intermédiaire (164Lm, 164Rm).

13. Véhicule de type à selle comprenant la structure de châssis de véhicule selon l'une quelconque des revendications 1 à 12, comprenant :
un capot du corps de véhicule (18) ; et
un siège (13) disposé au dessus du châssis supérieur gauche (163L) et du châssis supérieur droit (163R), le capot du corps de véhicule (18) comprenant :
une partie de protection de jambe (182) disposée derrière le tube frontal (161) ;
une partie arquée (185) disposée entre la partie de protection de jambe (182) et le siège (13) et ayant une forme convexe en coupe transversale vue de l'avant pour couvrir par le haut une partie du châssis supérieur gauche (163L) et une partie du châssis supérieur droit (163R) ; et
une partie repose-pieds (186) qui fait saillie vers l'extérieur dans la direction de la largeur du véhicule à partir d'une extrémité inférieure de la partie arquée (185).
